# EUROPEAN PATENT APPLICATION

(11) **EP 2 667 146 A1**
(43) Date of publication of application: **27.11.2013**
(21) Application number: 12168910.3
(22) Date of filing: 22.05.2012
(51) Int. Cl.: G01B 11/00, G01B 21/04

(54) **Optical arrangement comprising an optical acquiring unit and a light emitting unit**

(71) Applicant: inos Automationssoftware GmbH, 70563 Stuttgart (DE)
(72) Inventor: Tassakos, Charalambos, 70597 Sonnenberg (DE); Lesch, Thomas, 70176 Stuttgart (DE); Theiakos, Konstantinos, 71116 Gärtringen (DE); Demopoulos, Andreas, Leighton Buzzard, LU74WL Bedfordshire (GB)
(74) Representative: Dreiss

(57) **Abstract**

The invention refers to an optical arrangement (5) comprising a carrier unit (11) made of a rigid material, at least one of an optical acquiring unit (12) and a light emitting unit (13), all of the optical acquiring and light emitting units (12, 13) of the optical arrangement (5) being releasably connected to the carrier unit (11). In order to provide for a fast, precise and repeatable connection of the optical acquiring unit (12) and/or the light emitting unit (13) to the carrier unit (11) at least one of the optical acquiring unit (12) and the light emitting unit (13) is connected to the carrier unit (11) by means of a two-part tapered dovetail connection arrangement (14, 15).

## Description

The present invention refers to an optical arrangement comprising a carrier unit made of a rigid material, an optical acquiring unit and a light emitting unit both releasably connected to the carrier unit.

The optical arrangement, for example, could make part of a flexible metrology system. Such systems can be used for in-line or fixed measurement applications. The optical arrangement can comprise, for example, one or more laser triangularization sensors, stereo or combined stereo and laser triangularization sensors.

A laser triangularization sensor is made up of two essential elements, i.e. a light emitting unit (e.g. a laser or light projector) and a light acquiring unit (e.g. a camera). The light emitting unit emits a well-defined pattern of light known in the art as "structured light" that comprises a plurality of, for example, thin light beams or thin light planes. When these light beams or planes are projected onto a surface of a general three dimensional object to me measured, they produce patterns of light dots or contoured light lines on the surface of the object, the position and curvature of these light patterns depending on the shape of the object to be measured. The position and curvature of a light pattern are the light pattern's light features. These light features are captured by the light acquiring unit and their spatial positions are measured relative to the frame of reference to which the sensor has been calibrated.

The calibration process is a well-established method that relates the camera and laser so they are transformed from individual objects into a metrology system known in the art as laser triangularization sensor. Two cameras calibrated in respect to one another form a stereo pair. Many cameras and laser/light projectors assembled together in a carrier unit or rigid framework and calibrated in a local or global reference frame produce a network of laser and stereo sensors that measure specific areas of interest of the object to be measured.

A single laser triangularization and/or stereo sensors or a network of sensors can be fixed or carried by an industrial robot or another device in order to realize flexible metrology systems.

Some key requirements of such a flexible metrology system is the ability to change the sensor geometry and configuration so as to adapt the system to the application in hand. Further requirements are the adjustability of individual sensor components (camera and laser/light projectors) with a minimum of operations and the ability to easily replace sensor components. The latter is particularly challenging because of the built up tolerances of individual components in the metrology system. Due to those tolerances, for example, when a camera is replaced it does not have exactly the same field of view as the replacing camera because the image is not formed exactly on the same area of the cameras' imaging sensors. For a light emitting unit (e.g. laser or light projector) the replacing unit's pattern of light beams and planes is not exactly the same as the pattern of the replaced unit. All these differences are small but for metrology systems very important because it means that when certain units or items of the metrology system are replaced they do not measure the specific features with the required or desired accuracy.

An optical arrangement of the above-identified kind is known from DE 103 11 247 A1, for example. In the known arrangement the carrier unit is embodied as a profile having a U-shaped cross section. The profile can be cut and folded out of a metal sheet. The light emitting unit and/or the optical acquiring unit each comprise a housing element, which is formed in such a way that it can be inserted into the inside of the profile from an open side of the profile and disposed therein, possibly free from float or play. The profile comprises holes for receiving screws and the housing of the optical acquiring unit and the light emitting unit, respectively, comprise threaded holes for receiving the screws put through the holes of the profile. In order to releasably fasten the optical acquiring unit and the light emitting unit, respectively, to the profile, fastening screws are inserted into the holes and screwed into the threaded holes.

This kind of fastening enables a high precision fastening of the optical acquiring unit and the light emitting unit, respectively, to the carrier unit. However, it is very time consuming and requires a plurality of separate screws as fastening means. Further, the dimensions of the housings of the optical acquiring unit and the light emitting unit, respectively, must be adapted exactly to the dimensions of the inside of the U-shaped profile and both the U-shaped profile as well as the housings must be manufactured with an extremely high precision in order to achieve the desired accuracy of the entire optical arrangement. Furthermore, after loosening the screwed connection the housings can be moved inside the profile and it cannot be ensured that when tightening the screws again the optical acquiring unit and the light emitting unit, respectively, are still and will remain exactly in the same position in respect to the carrier unit. Finally, the entire optical arrangement known from the prior art is aesthetically attractive only to a limited extent because the open side of the U-shaped profile allows insight into the inside of the profile, where the cabling for the optical acquiring unit and the light emitting unit, respectively, runs and where further electric components of the optical arrangement may be located, like for instance processing and controlling means for controlling the optical acquiring unit and the light emitting unit, respectively, and for processing the images taken by the optical acquiring unit.

Therefore, it is an object of the present invention to suggest an aesthetically appealing optical arrangement, in which the optical acquiring unit and the light emitting unit, respectively, can be reliably connected to the carrier unit with a high precision on the one hand and quickly, straightforward and uncomplicated on the other hand.

The present invention sets out to address all of the above identified problems by providing a new generation of optical arrangements (e.g. sensors) that are flexible in configuration and in which the light acquiring unit (e.g. a camera) and the light emitting unit(s) (e.g. one or more laser sub-assemblies) are easily adjustable and lockable in place in respect to the carrier unit so that the cameras in those sensors have the same field of view and the patterns of structured light emitted from the laser/light projectors are projected onto the same are on the object to be measured.

For solving this problem, according to a preferred embodiment of the present invention, it is suggested that at least one of the optical acquiring unit and the light emitting unit is connected to the carrier unit by means of a two-part tapered dovetail connection arrangement. The optical acquiring unit and/or the light emitting unit can be directly connected to the carrier unit or assembly. Alternatively, the optical acquiring unit and/or the light emitting unit could make part of an optical acquiring assembly and a light emitting assembly, respectively, and could be connected to the carrier unit or assembly indirectly by means of one or more further parts of the assemblies.

The releasable connection of the optical acquiring unit and the light emitting unit, respectively, to the carrier unit according to the present invention comprises a first partial element in the form of a groove having a longitudinal extension and a trapeze formed cross section.

In a cross sectional view at any given position along the longitudinal extension of the groove the width of the groove near the bottom of the groove is larger than the width of the groove opposite to the bottom of the groove, where the groove opens versus the outside. Further, the groove constantly converges along its longitudinal extension from one end of the groove to the opposite end, thereby constantly reducing the width of the groove along its longitudinal extension. So if one looks at two positions of the groove spaced apart from one another along the longitudinal extension of the groove in a cross sectional view, the width at the bottom of the groove at a first position is larger than at the other position. Equally, the width of the groove opposite to the bottom of the groove, where the groove opens to the outside, at the first position is larger than at the second position. The depth or profoundness of the groove is preferably constant along the entire longitudinal extension of the groove. However, it would also be possible that the depth or profoundness of the groove constantly increases or decreases from one end to the other end along the longitudinal extension of the groove.

Further, the releasable connection between the optical acquiring unit and the light emitting unit, respectively, and the carrier unit, according to the present invention comprises a second partial element in the form of a protrusion with a longitudinal extension and having a cross sectional form corresponding to the cross sectional form of the groove. Hence, the protrusion also has a trapeze-like cross sectional form. In a cross sectional view the width of the protrusion converges along its longitudinal extension from one end to the opposite end. The degree of converging of the sidewalls of the groove and of the protrusion is preferably the same for the groove and for the protrusion. The length along the longitudinal extension of the protrusion does not necessarily have to correspond to the length of the groove. However, it is preferred that the length of the protrusion is identical to the length of the groove.

The meaning of "two-part" is that the suggested connection arrangement comprises a first part (groove or protrusion) and a corresponding second part (protrusion or groove). The meaning of "tapered" is that the sidewalls of the groove and of the protrusion converge or diverge in respect to their longitudinal axis. The meaning of "dovetail" refers to the trapeze-like cross sectional form perpendicular to the longitudinal axes of the groove and the protrusion.

At that end of the groove which has a larger width than the opposite end the groove opens into an introduction and receiving section is located, which receives the protrusion displaced in its longitudinal extension in respect to the groove and with its longitudinal extension essentially parallel to the longitudinal extension of the groove. After insertion of the protrusion into the introduction and receiving section the protrusion can be inserted into the groove in a direction essentially extending parallel to the longitudinal extension of the groove. Thereby, that end of the protrusion, which has a smaller width in the sectional view than the opposite end, is directed towards the groove when inserted into the introduction and receiving section thereby facing the opening of the groove for subsequent insertion. After inserting the protrusion in the introduction and receiving section the protrusion can be inserted into the groove through the opening of the groove facing the introduction and receiving section. Because the end of the protrusion having a smaller width is inserted into that end of the groove having a larger width, a relatively imprecise positioning of the protrusion in respect to the groove during the insertion of the protrusion into the groove is sufficient. Therefore, establishing the connection between the optical acquiring unit or the light emitting device on the one hand and the carrier unit on the other hand can be easily performed automatically, for example by means of an industrial robot. The further the protrusion is introduced into the groove the more the protrusion is automatically positioned transversally with respect to the longitudinal extension of the groove. During establishment of the releasable connection between the optical acquiring unit and the light emitting unit, respectively, and the carrier unit, the groove serves as guiding means for the protrusion, thereby significantly alleviating the establishment of the releasable connection.

As soon as the end of the protrusion with the smaller width during the introduction into the groove arrives at a position within the groove where the width of the groove corresponds to the width at the slimmer end of the protrusion, the insertion movement comes to an end. If the degree of conical convergence of the groove's sidewalls and of the protrusion is the same, at the end of the introduction movement the sidewalls of the groove and of the protrusion rest on one another with their entire surfaces. Hence, the final position of the introduction movement is defined with a particularly high precision. At the same time, establishing the releasable connection is quick and easy.

The groove can either be located at the carrier unit or at a housing element of the optical acquiring unit or the light emitting unit, respectively. The protrusion is located at the corresponding other part of the connection arrangement, that is at the optical acquiring unit and the light emitting unit if the groove is located at the carrier element, or at the carrier element if the groove is located at the housing element of the optical acquiring unit or the light emitting unit, respectively. Preferably, the protrusion is located at the housing element of the optical acquiring unit and the light emitting unit, respectively, and the groove is located at the carrier unit.

According to a preferred embodiment of the present invention the protrusion is held in its final position in the groove by means for holding or securing the optical or lighting unit in respect to the carrier unit. The holding or securing means can be simply realized by some frictional contact taking effect between at least one of the walls of the protrusion and at least one corresponding of the walls of the groove. However, it is also possible that the two-part tapered dovetail connection arrangement comprises additional means for holding or securing the optical acquiring unit and the light emitting unit, respectively, in respect to the carrier unit when it is properly connected and positioned in its final position in respect to the carrier unit. The additional means can be, for instance, spring-loaded holding means, which provide for a secure connection of the optical acquiring unit and the light emitting unit, respectively, in respect to the carrier unit in its final position by means of frictional contact or a form fit or positive fit.

The present invention is particularly suitable for optical arrangements, where the optical acquiring unit acquires an object (e.g. a work piece) within an acquiring area at least partially and where the light emitting unit illuminates with a well-defined light pattern at least part of the work piece within the acquiring area. The optical acquiring unit preferably comprises a camera for optically acquiring at least part of the work piece. The camera can be designed as an analogue or as a digital camera, in particular as a CCD- or as a CMOS-camera. The light emitting unit preferably comprises a laser light emitting unit for illuminating at least part of the work piece within the acquiring area with a laser light. The laser can be designed such that it generates a line- or grid-type light pattern at least in part of the acquiring area on the work piece's surface and possibly on adjacent component parts, too. The laser light unit can emit light within the visible or the invisible (e.g. UV-, IR-) wavelength interval. The light emitting unit and the optical acquiring unit can be constantly activated or activated at discrete points in time on a synchronized clocked basis.

A digital camera optically acquires the work piece and possibly one or more adjacent component parts and generates an electrical sensor signal corresponding to and indicative of the acquired image. The sensor signal is processed by an evaluation unit, for example for determining a gap and/or a displacement (parallel offset) of the work piece in respect to an adjacent component part. In particular, the optical arrangement can be used during the mounting of flaps (for example doors, a boot lid, a front or engine lid etc.) of a motor vehicle or of other vehicle components (for example a sun roof) into an appropriate opening in the vehicle body. During mounting of the work piece the gap and/or the displacement values of the work piece in respect to the adjacent component part or the remaining vehicle body is constantly determined and the insertion of the work piece into the opening in the vehicle body controlled accordingly.

The determined values of the gap and/or displacement can be used for controlling an industrial robot, which has the work piece for mounting to or into the opening in the vehicle body attached to the distal end of its robot arm. The robot or robot arm is controlled in order to make all gaps between the work piece and the adjacent vehicle components as equal as possible and to adjust the displacement in a desired way, for example as small as possible. Of course, the optical arrangement can also be used for attaching or inserting of other parts, for example a radiator grill, vehicle lighting devices (headlights or lamps) to or into a vehicle body. Further, the optical arrangement can also be used in the field of quality control for controlling the accuracy during the manufacturing and/or mounting process on the basis of already mounted body components. Furthermore, it is possible to use the optical arrangement in other fields, for example for inserting and mounting a hop or a sink into a work or kitchen top.

Furthermore, it is suggested that the optical arrangement comprises means for processing and controlling, which are connected to the optical acquiring unit and the light emitting unit, respectively, and that the carrier unit comprises a hollow space, wherein the processing and controlling means are located. The processing and controlling means serve for processing the sensor signals received from the optical acquiring unit, in order to be able to determine and characterize the state of the work piece within the acquiring area, for example with regard to a gap and/or a displacement in respect to one or more adjacent body component parts. Processing of the sensor signals may be effected by adapted image processing software, which can run on one or more microprocessors of a computer.

Further, the processing and controlling means can be responsible for controlling the optical acquiring unit and the light emitting unit, respectively. For example, they can provoke the light emitting unit to generate and emit a desired light bundle or light pattern. Additionally, they can provoke the optical acquiring unit to acquire one or more images of the work piece within the acquiring area when the light emitting unit is activated. In particular, a clocked operation of the light emitting unit and the optical acquiring unit is advantageous, in which the light emitting unit is temporarily turned on only for a very short period of time for illuminating the work piece and synchronized thereto the optical acquiring unit is temporarily triggered to make one or more images of the illuminated work piece. Further, the processing and control means can control the functioning of additional appliances located at the optical arrangement, like for instance a cover element movably disposed in front of an acquiring window of the optical acquiring unit in order to protect the acquiring window and the optical acquiring unit, respectively, from heat, mechanical, chemical or physical damage, for example from hot soldering splatters or the like. The cover elements are actuated by electric motors or solenoids, which can be controlled and activated by the processing and control means.

The processing and controlling means on their part can receive control and operational information from a higher-ranking control unit, which is preferably located outside of the carrier unit and separate from the optical arrangement. The higher-ranking control unit can make, for example, part of a measuring tunnel comprising a plurality of optical arrangements of the kind described herein. The processing and control means for controlling the operation of the cover element(s) can be located internally within the carrier assembly. In that case the processing and control means could provide for control and operation of the laser, the camera and/or the cover element(s). Alternatively, the processing and control means can be located at least partially separately from the carrier assembly and the optical arrangement, for example making part of the higher-ranking control unit.

In a particularly preferred embodiment the optical arrangement is adapted for connection to a distal end of an arm of a manipulator, in particular to a distal end of a robot arm of an industrial robot. The optical arrangement can be moved by the manipulator such that any desired work piece is arranged within the optical arrangement's acquiring area, in order to determine the condition (position, arrangement and displacement) of the work piece within the acquiring area either absolutely or relatively in respect to one or more adjacent body components. This has the advantage that one and the same optical arrangement can be used for acquiring the condition of one or more work pieces in different, spaced apart acquiring areas. Further, it is possible that the manipulator moves the optical arrangement during the image acquiring process, thereby following a corresponding movement of the work piece (for example a flap of a vehicle body) or of an adjacent body component (for example a motor vehicle body located on a assembly line), so that the work piece and the adjacent body component remain within the acquiring area during the process of image acquiring. The optical arrangement can be connected to the distal end of the robot arm, for example, by means of a ball joint.

Additionally, fastening means for a work piece (for example a flap of a vehicle body, a vehicle lighting device, a radiator grill, a hop, a sink, et cetera) can be provided at the distal end of the robot arm additionally to the optical arrangement according to the present invention, so that the optical arrangement is moved together with the work piece fastened to the robot arm. Hence, the robot arm is used for bringing the work piece into its mounting position and at the same time moving the optical arrangement such that it can acquire and determine gaps and displacements of the work piece in respect to adjacent components during the mounting process. The fastening means can, for example, comprise one or more mechanical grippers, vacuum suction devices, solenoids, et cetera.

According to a preferred embodiment, the optical acquiring unit and/or the light emitting unit is located within a unit housing. The unit can be fixed within the housing and/or the housing can be releasably fixed to the carrier unit/ assembly in such a way that in a first released position of a fixing unit the acquiring and/or emitting unit can be moved in respect to the housing and/or the housing can be moved in respect to the carrier unit/assembly and in a second fixed position of the fixing unit the acquiring and/or emitting unit can be fastened in its current position. For example, in the first position the camera unit's housing can be rotated in approximately +/- 6 degrees in all three axes relative to the base of the camera and about the centre of the camera's imaging sensor. This arrangement compensates for variations in the positioning of the imaging sensor relative to the camera body and ensures that the field of view is the same in all measurement sensors. Once the camera body is adjusted in the desired position, the camera body is locked in place relative to its base. This embodiment enables individual components within a sensor or the sensor as a whole to be replaced in a highly repeatable manner so that individual components of the senor or the whole sensor can be exchanged as spare parts without affecting the position or accuracy of the metrology system.

Further features and advantages of the present invention are described in detail hereinafter referring to the following figures. The figures show:
- Fig. 1: an industrial robot with an optical arrangement according to the present invention attached to the distal end of the robot arm in a preferred embodiment;
- Fig. 2: an example for a possible use of the optical arrangement according to the present invention;
- Fig. 3: a further embodiment of an industrial robot with an optical arrangement according to the present invention attached to the distal end of the robot arm;
- Fig. 4a: a carrier unit of the optical arrangement according to the present invention in a preferred embodiment;
- Fig. 4b: part of an optical acquiring unit or of a light emitting unit of the optical arrangement according to the present invention in a preferred embodiment;
- Fig. 5: a further embodiment of a carrier unit in a frontal view;
- Fig. 6: the carrier unit of Fig. 5 in a rear view;
- Fig. 7a: a carrier unit of the optical arrangement according to the present invention in a further preferred embodiment;
- Fig. 7b: part of an optical acquiring unit or of a light emitting unit of the optical arrangement according to the present invention in a further preferred embodiment;
- Fig. 8: an optical arrangement according to the present invention in a further preferred embodiment;
- Fig. 9: a perspective view of an assembled optical arrangement embodied as a laser triangularization sensor;
- Fig. 10: an exploded view of the sensor shown in Fig. 9, showing the four major sub-assemblies of the sensor;
- Fig. 11: a perspective view of an assembled optical arrangement embodied as a combined type of stereo and laser triangularization sensor;
- Fig. 12: an exploded view of the sensor shown in Fig. 11;
- Fig. 13: a ball joint connection assembly for fixing the sensor to an external supporting framework;
- Fig. 14: an optical acquiring unit attached independently to an external supporting framework;
- Fig. 15: an exploded view of the main parts of the optical acquiring unit according to Fig. 14;
- Fig. 16: a bottom view of a spherical cradle for the optical acquiring unit, showing a tapered dovetail connection for connecting the optical acquiring unit to the carrier unit;
- Fig. 17: a cross section AA₁ of the optical acquiring unit of Fig. 14;
- Fig. 18a: part of an optical acquiring unit or of a light emitting unit of the optical arrangement according to the present invention in a further preferred embodiment;
- Fig. 18b: a coupling element of the optical acquiring unit or of the light emitting unit of the optical arrangement according to the present invention in a preferred embodiment;
- Fig. 19: the coupling element of Fig. 18b in a view along lines VII-VII;
- Fig. 20: a light emitting unit embodied as a laser assembly attached independently to an external supporting framework;
- Fig. 21: part of an optical acquiring unit or of a light emitting unit of the optical arrangement according to the present invention in a further preferred embodiment;
- Fig. 22: part of the optical acquiring unit or of the light emitting unit of Fig. 21 in a sectional view along a sectional plane IX-IX;
- Fig. 23: an exploded view of the laser assembly of Fig. 20;
- Fig. 24: a cross section BB₁ of the laser assembly of Fig. 20;
- Fig. 25: a light emitting unit embodied as a laser assembly variant with a rectangular body;
- Fig. 26: an exploded view of the laser assembly of Fig. 25;
- Fig. 27: an alternative external attachment for articulating and sliding the connection of the optical arrangement in respect to an external supporting framework; and
- Fig. 28: an exploded view of the external attachment of Fig. 27.

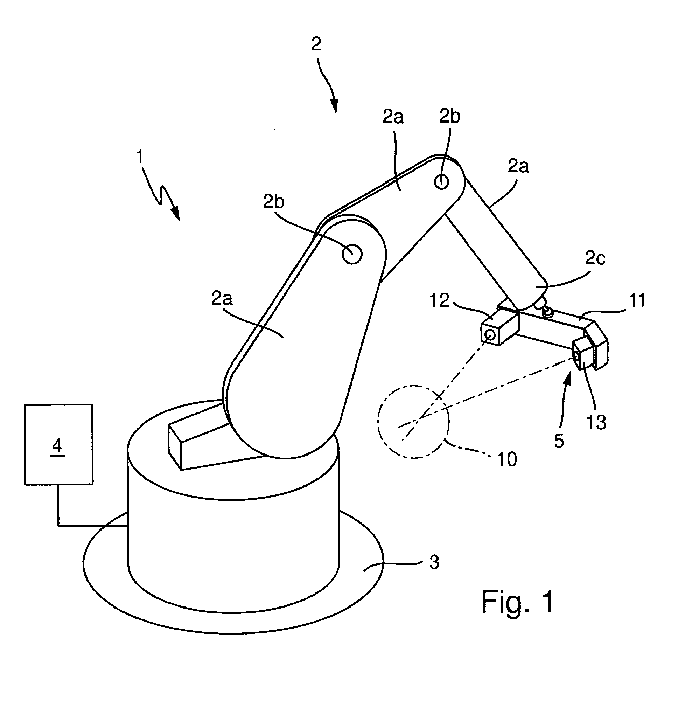

Fig. 1 shows a conventional manipulator with an optical arrangement according to the present invention attached to a distal end of a manipulator arm. In the embodiment of Fig. 1 the manipulator is an industrial robot 1 having a robot arm 2 comprising a plurality of arm sections 2a and universal links or joints 2b for interconnecting the robot arm sections 2a with one another. The distal end 2c of the robot arm 2 can be moved in any desired position orientation located in any desired position and facing in any desired direction in six degrees of freedom within the robot's range of movement.

In the shown embodiment the robot 1 is statically fixed to a ground floor 3. However, it is also possible that the robot 1 is mobile and freely movable in respect to the ground floor 3. The robot 1 comprises a control unit 4, which may be connected to a higher-ranking controller. The controller can be in charge of one or more robots 1 and coordinates and controls their movement. The control unit 4 generates control signals in order to make the robot 1 or the robot arm 2, respectively, move in a desired way in order to make the distal end 2c of the robot arm 2 move along a desired path and reach and face a desired working or acquiring area in a desired position and orientation at the end of the path. Other parameters of the robot's movement like speed and acceleration of the distal end 2c of the robot arm 2 can be controlled, too. The control unit 4 may also generate and provide control signals for the optical arrangement 5 fixed to the distal end 2c of the robot arm 2.

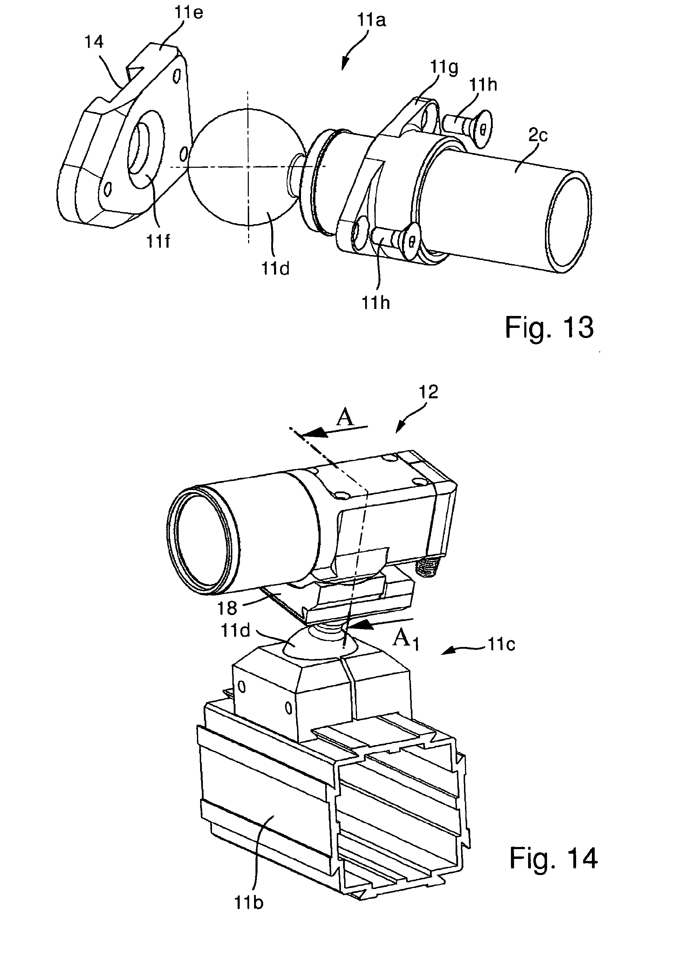

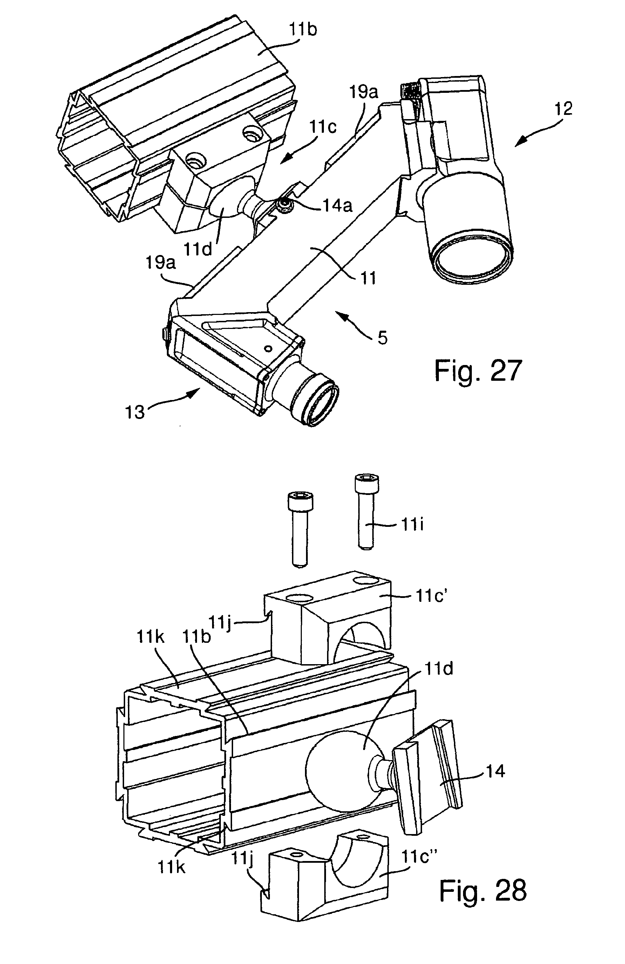

The optical arrangement 5 is preferably attached to the distal end 2c of the robot arm 2 in a releasable manner. Furthermore, the optical arrangement 5 can be fixed to the distal end 2c in any desired orientation. Preferably, the optical arrangement 5 is attached to the distal end 2c by means of a ball joint connection assembly (see Figs. 13 and 28). The ball joint connection can be freely moved in various degrees of freedom in a released position and can be fixed in a desired orientation in a fixed position. The optical arrangement 5 and the ball joint connection assembly will be described in more detail below.

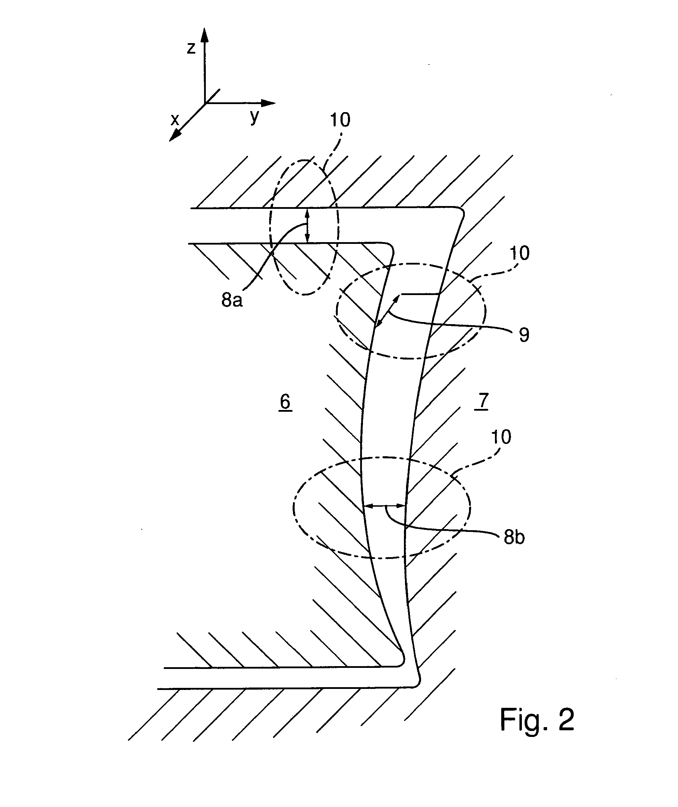

Now referring to Fig. 2, an example for a possible use of the optical arrangement 5 is provided. A work piece 6 is shown positioned and orientated in a certain manner in respect to an adjacent component 7. In particular, the work piece 6 is positioned with certain gaps 8a, 8b in respect to the component 7 and with a certain displacement 9 in respect to a plane defined by the extension of component 7.

The work piece 6 can be, for instance, a flap (door, trunk lid, engine lid, et cetera) of a motor vehicle and the component 7 can comprise, for instance, other parts of a vehicle body and/or already mounted flaps. Alternatively, the work piece 6 could also be a lighting device, a radiator grill, a pane of glass or similar to be mounted and fixed in an appropriate opening in a vehicle body 7. In another embodiment the work piece 6 could also be a hob or cook top or a kitchen sink to be mounted in an appropriate opening of a kitchen work plate 7. Numerous other embodiments are immediately apparent to the skilled person and are also comprised by the present invention.

The optical arrangement 5 according to the present invention may be used for determining the gaps 8a, 8b and the displacement 9 of the work piece 6 in respect to the components 7 within given acquiring areas 10. The optical arrangement 5 can be moved into the desired position and orientation in respect to the work piece 6 and the component 7 such that the gap 8a and 8b and/or the displacement 9 to be determined is located within the acquiring area 10 of the optical arrangement 5. This movement and orientation of the optical arrangement 5 can be effected by the robot 1 or the robot arm 2, respectively.

The construction and the exact functioning of the optical arrangement 5 for acquiring the dimensions of gaps 8a, 8b and of displacements 9 is described in detail in DE 199 10 699 A1 and in DE 103 48 500 A1. Both documents are incorporated herein by reference. These two documents describe in detail how an optical arrangement similar to the optical arrangement 5 according to the present invention acquires images within an acquiring area corresponding to the acquiring area 10, how corresponding sensor signals are generated and how the sensor signals corresponding to and indicative of the acquired images are processed in order to determine the dimensions of gaps 8a, 8b and displacements 9. The functioning of the optical arrangement 5 is very similar to that of the optical arrangement described in the two documents. The present invention refers to an advantageous construction of the optical arrangement 5, which will be described in detail hereinafter.

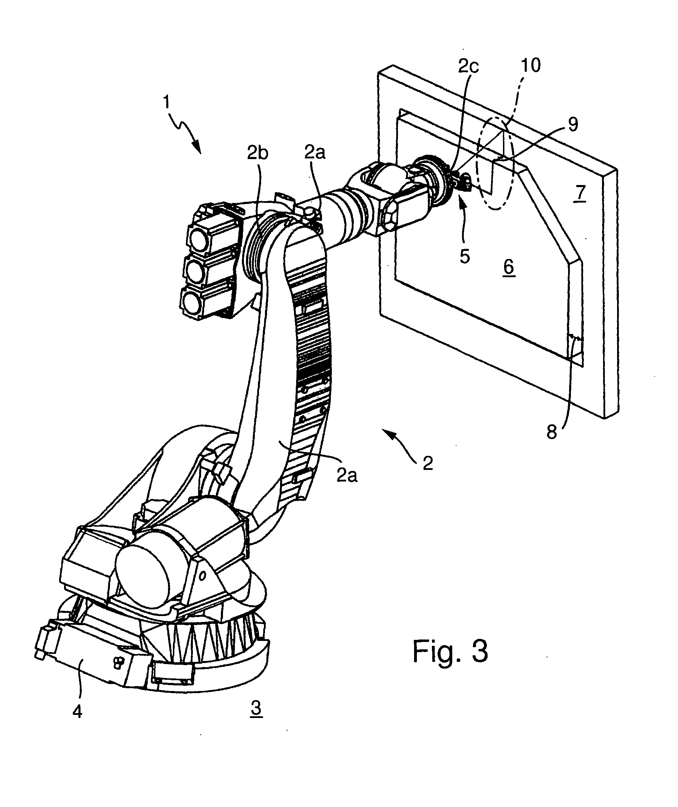

Fig. 3 shows another embodiment of a manipulator 1 carrying an optical arrangement 5 according to the present invention at the distal end 2c of its arm 2.

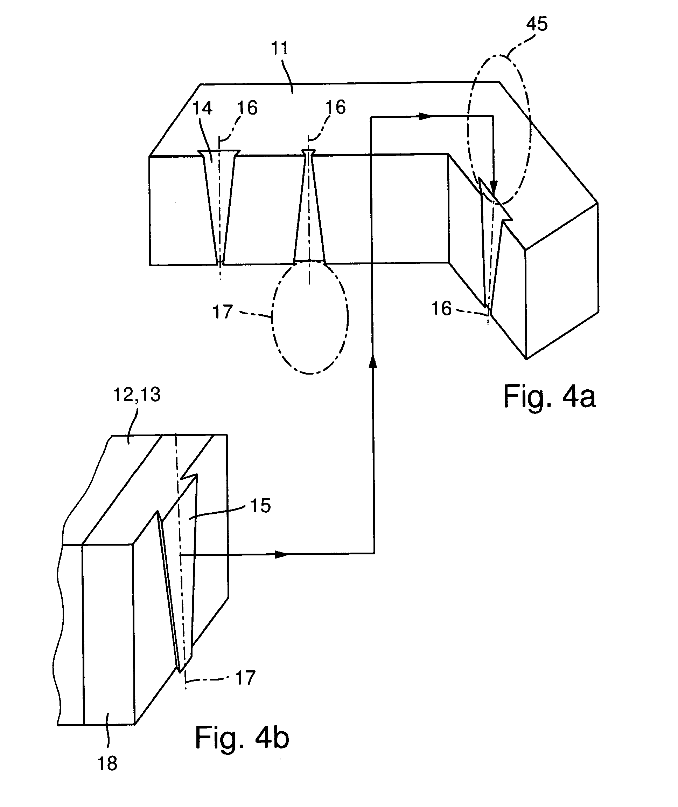

Figs. 4a and 4b show various components of the optical arrangement 5 according to the present invention. Fig. 4a shows a carrier unit 11 (also referred to as carrier assembly) made of a rigid material like metal, in particular aluminium. The carrier assembly 11 is the backbone of the optical arrangement 5. The carrier unit 11 is preferably an extruded profile. It can be made in any desired length, whereby the cutting to the appropriate length can be performed by simply sawing or cutting. Fig. 3b shows an optical acquiring unit 12 or a light emitting unit 13 both making part of the optical arrangement 5. The unit 12, 13 can be releasably connected to the carrier unit 11.

According to a preferred embodiment of the present invention all sub-assemblies attached to the carrier unit 11 (e.g. the optical acquiring unit 12 and/or the light emitting unit 13) are connected to the carrier unit 11 by means of a two-part tapered dovetail connection arrangement. The tapered dovetail connection arrangement is essentially formed by two parts comprising a groove 14 and a protrusion 15, which can be inserted into the groove 14 and removed from it as desired. The groove 14 is also referred to as a female part of the tapered dovetail connection and the protrusion 15 is referred to as a male part of the connection.

According to the embodiment shown in Figs. 4a and 4b, the grooves 14 are located at the carrier unit 11. The grooves 14 can be formed in a sidewall of the carrier unit 11 in different ways, for example by milling. In the embodiment of Fig. 4a the carrier unit 11 comprises three grooves 14. Of course, it would be possible to provide more or less than the shown three grooves 14. Furthermore, the grooves 14 can be designed in any one or more sidewalls of the carrier unit 11. Also, the orientation of the grooves 14 along their longitudinal axes 16 can vary. The embodiment of Fig. 4a shows only grooves 14 with essentially vertical longitudinal axes 16. Of course, the grooves 14 could also be orientated in such a way that the longitudinal axes 16 are inclined in respect to one another and to the carrier unit's sidewalls at the distal ends of the carrier unit 11.

The protrusion 15 is located at the optical acquiring unit 12 or the light emitting unit 13, respectively. The protrusion 15 has a longitudinal extension along a longitudinal axis 17. Again, the protrusion 15 can be located at the units 12, 13 in any desired position and orientation of the longitudinal axis 17. The form of the protrusion 15 essentially corresponds to the form of the groove 14. Of course it would also be possible to provide the groove 14 at the optical acquiring unit 12 or the light emitting unit 13 and one or more protrusions 15 at the carrier unit 11.

It is one characteristic of the tapered dovetail connection arrangement that the groove 14 and the protrusion 15 have a width constantly increasing or decreasing along their longitudinal axes 16, 17. Seen in a sectional plane extending perpendicularly in respect to the optical axes 16, 17, the groove 14 and the protrusion 15 have the form of a trapeze similar to the form of a dovetail. At any given cross section along the longitudinal axis 16, the width at the bottom of the groove 14 is larger than at the open part of the groove 14 opposite to the groove's bottom where the groove 14 opens to the outside in the same cross section. This means that the groove's sidewalls form an undercut. In contrast thereto, seen in a certain cross section along the longitudinal axis 17, the bottom of the protrusion 15 has a smaller width than the opposite part of the protrusion 15 in the same cross section. Hence, when the protrusion 15 is inserted into the groove 14 those parts of the protrusion 15 facing the outside are received by the undercut portions of the groove 14 thereby bringing the optical acquiring unit 12 or the light emitting unit 13 in a predefined position in respect to the carrier unit 11 with a very high precision. Furthermore, the position of the optical acquiring unit 12 or the light emitting unit 13 in respect to the carrier unit 11 is repeatable, which means that after dismantling the unit 12, 13 from the carrier unit 11 and repositioning the unit 12, 13 or another similar unit 12, 13 at the carrier unit 11, the unit 12, 13 will be exactly in the same position in respect to the carrier unit 11 as before. The suggested tapered dovetail connection arrangement 14, 15 provides for a stress free, releasable connection of the optical acquiring unit 12 or the light emitting unit 13 to the carrier unit 11.

Preferably the two-part tapered dovetail connection arrangement 14, 15 comprises means for holding or securing the optical acquiring unit 12 or the light emitting unit 13 in respect to the carrier unit 11, when the unit 12, 13 has reached its end position and is properly connected to the carrier unit 11. In particular, the optical acquiring unit 12 or the light emitting unit 13 can be held in their end position in respect to the carrier unit 11 by means of friction of the protrusion's 15 sidewalls in respect to the groove's 14 sidewalls. Such a friction is in particular present, if the protrusion's 15 sidewalls and the groove's 14 sidewalls have the same inclination along their longitudinal extension in respect to their longitudinal axes 16, 17. In that case the sidewalls of the protrusion 15 and of the groove 14 rest on one another with their entire surfaces in the end position.

For introducing the protrusion 15 into the groove 14, the protrusion 15 is brought into an introduction and receiving section 45 located at the wider end of the groove 14 and displaced in respect to the groove 14 along its longitudinal axis 16. The protrusion 15 is brought into the introduction and receiving section 45 with its slimmer end facing the groove 14 and then slid into the groove 14 in a movement essentially parallel to the longitudinal axis 16 of the groove 14.

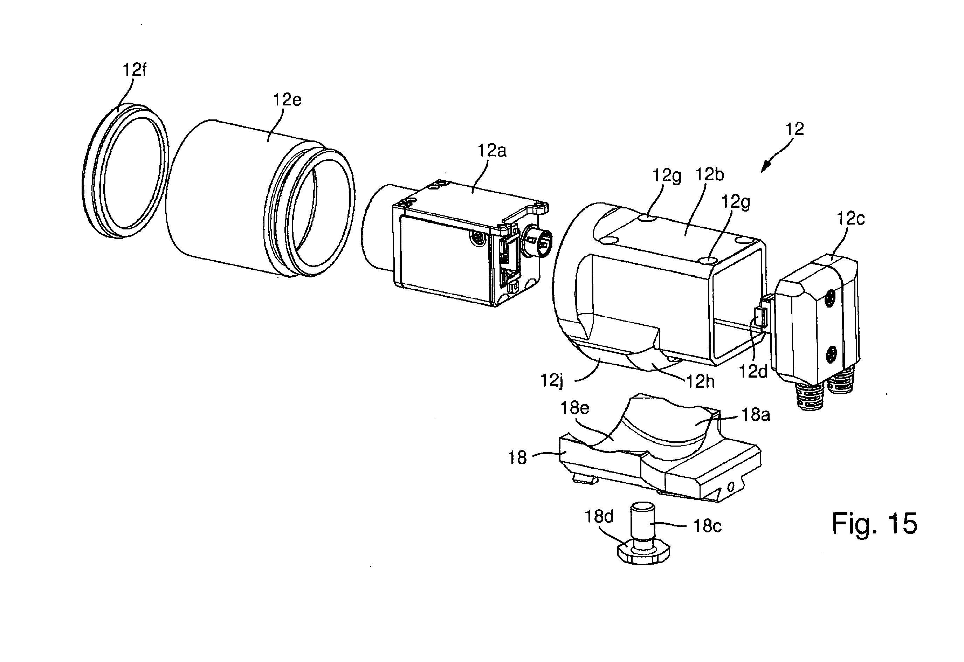

As can be seen in Fig. 4b, the protrusion 15 does not necessarily have to be directly connected to the optical acquiring unit 12 or the light emitting unit 13. In the embodiment shown in Fig. 4b, the protrusion 15 is arranged on a coupling element 18, which is releasably connected to the optical acquiring unit 12 or the light emitting unit 13 or to another component in connection with the units 12, 13. A coupling element 18 and a component 12; 13 connected thereto form a certain sub-assembly. The coupling element 18 is described in further detail with reference to Figs. 15 to 19 below.

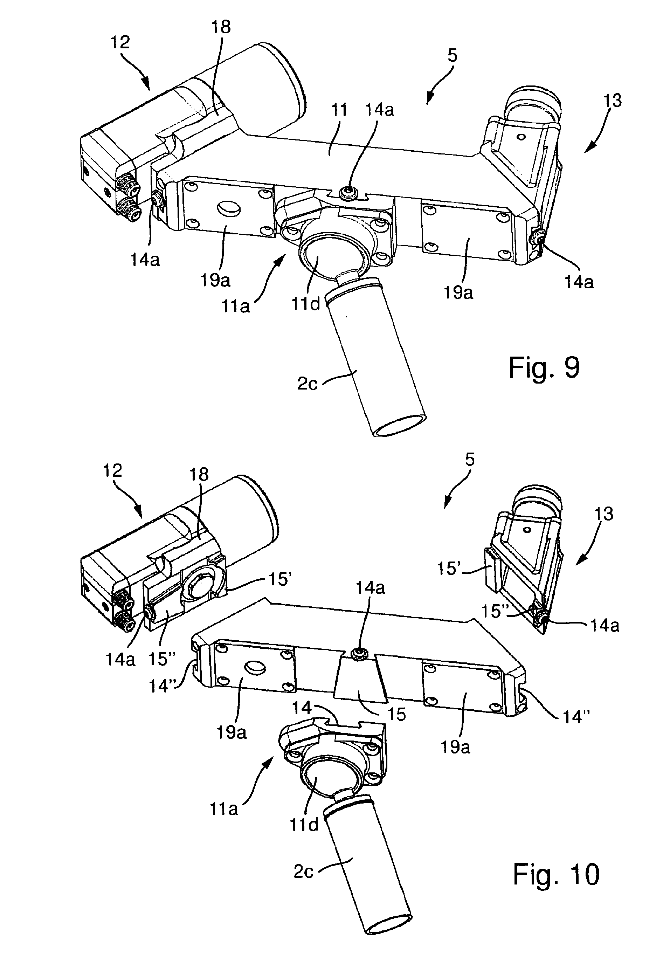

Any sub-assembly 12; 13 attached to the carrier assembly 11 via a tapered dovetail connection 14, 15 can be inserted from one side only and in one direction only. The assembly 12; 13 slides along the direction of the tapered dovetail joint 14, 15 and once fully inserted, a locking screw 14a (see Figs. 9 to 12) constituting means for holding or securing the assembly 12, 13 in respect to the carrier unit 11 is inserted and slightly tightened to prevent the assembly 12, 13 from sliding out. The required torque applied to the locking screw 14a is low but on the other hand high enough to take up any clearance in the tapered dovetail connection 14, 15. The torque applied to the screw 14a can be controlled by existing torque limiting tools, in order to provide for the tapered dovetail connection 14, 15 to be slightly pre-stressed and clearance free. Therefore, the tapered dovetail concept achieves a substantially stress free, clearance free and quickly releasable connection with repeatable and high repositioning accuracy. This accuracy can be tailored to meet the requirements of the application using existing manufacturing methods such as machining, grinding and wire erosion. Wire erosion in particular is a highly accurate manufacturing method, capable of achieving tolerances of just a few microns.

The importance of the tapered dovetail connection 14, 15 is that it establishes an interface that separates variations in the camera or laser sub-assemblies 12, 13 from the supporting structure 11 underneath the tapered dovetail connection 14, 15 that does not have such variations.

Variations in the camera and laser sub-assemblies 12, 13 occur as a result of manufacturing tolerances and assembly procedures of individual parts within these sub-assemblies 12, 13. For this reason the camera and laser sub-assemblies 12, 13 above the tapered dovetail connection 14, 15 are provided with articulating features that provide adjusting and locking capabilities. These articulating features are described in more detail below.

Since the tapered dovetail connection 14, 15 provides for a highly repeatable repositioning of a given sub-assembly 12; 13 and does not itself introduce variations that could affect the accuracy of the measurement system 5 in any significant way, camera and laser sub-assemblies 12, 13 can be treated as individual entities. This enables those sub-assemblies 12, 13 to be adjusted for variations of individual elements within those sub-assemblies 12, 13, calibrated and serialized as individual units so that they are uniquely identified within a metrology system 5. Therefore, instead of handling differences of a large measurement system 5 due to replacement of individual camera, laser and sensor sub-assemblies 12, 13, differences of those parts are handled at individual level. This is only possible because the tapered dovetail connection 14, 15 establishes a demarcation line above which there are variations from individual parts from below the tapered dovetail connection where there are no such variations.

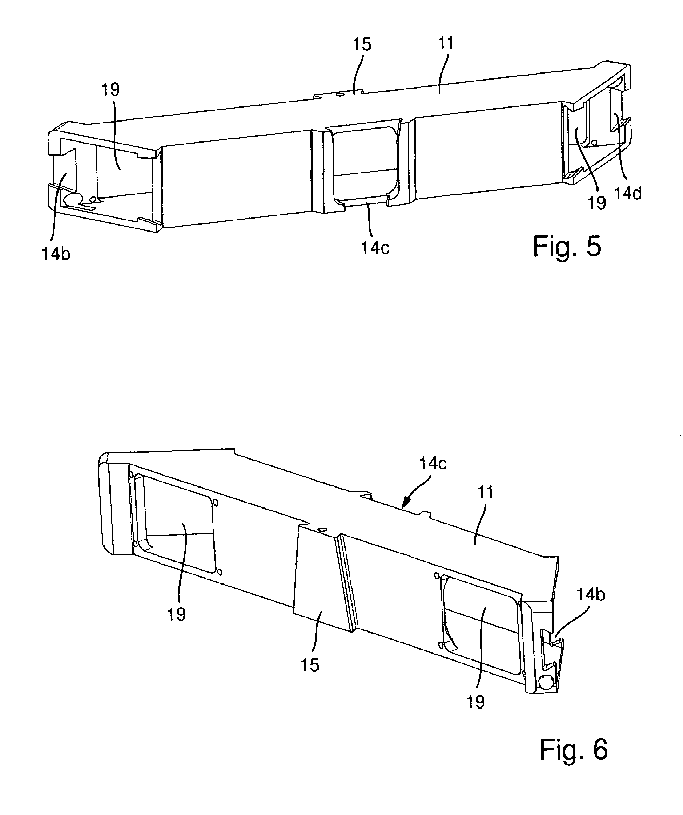

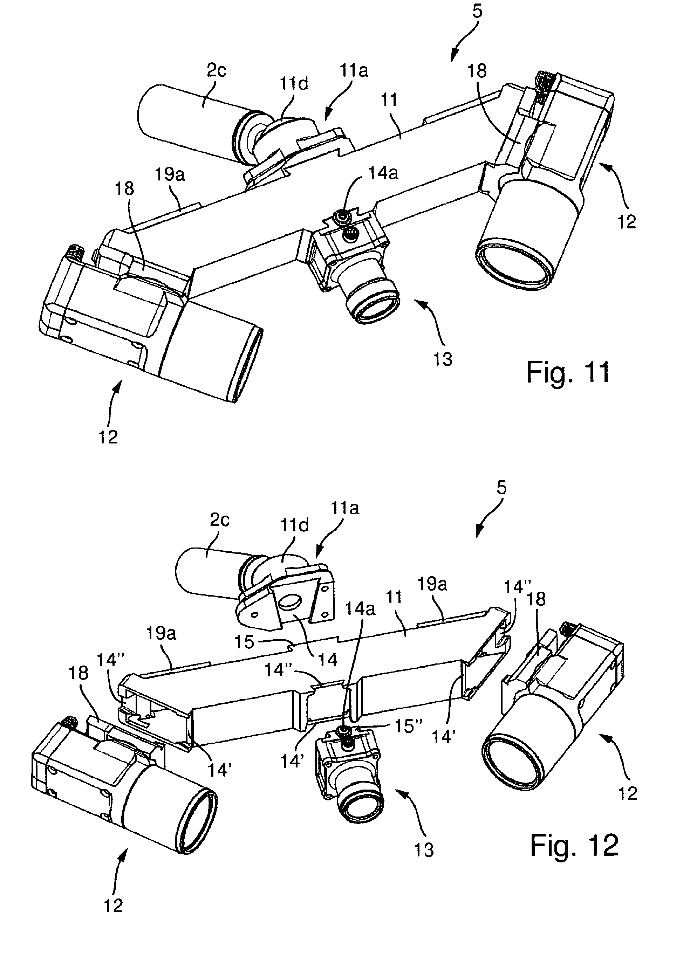

Fig. 5 shows a preferred embodiment of the carrier assembly 11. In general, camera assembly 12, laser assembly 13 and an external attachment assembly 11a for connecting the carrier assembly 11 to the distal end 2c of a robot arm 2 or to any other supporting framework (see Figs. 14, 20, 27 and 28) can be attached to the carrier assembly 11 from various positions; from the sides, from the back and also from the front as shown in Figures 11 and 12. Although not shown in the current illustration, it is appreciated that tapered dovetail connections 14, 15 can be located at the top and/or the bottom of the carrier unit 11, too.

Furthermore, it is appreciated that although the various embodiments of the carrier unit 11 are shown as having a square cross section, the carrier unit 11 could also have any other cross sections as long as it is provided with a flat portion to allow for the machining of one part 14; 15 of the tapered dovetail connection 14, 15. Such other cross sections could be, for example, triangular, hexagonal, octagonal or any other regular or irregular cross section.

In addition, the carrier unit 11, although shown in the figures as having an essentially straight extension, could also be curved or angled having straight portions connected together so as to form a curved or angled shape.

The position and orientation of the tapered dovetail connections 14, 15 in connection with the shape of the carrier unit 11 provide a highly flexible means of configuring the optical arrangement 5, e.g. the laser and stereo triangularization sensor. The geometry of the sensors 5 can be changed by varying the distance of attachment of various sub-assemblies 12, 13 attached to the carrier unit 11 and the angle relative to one another.

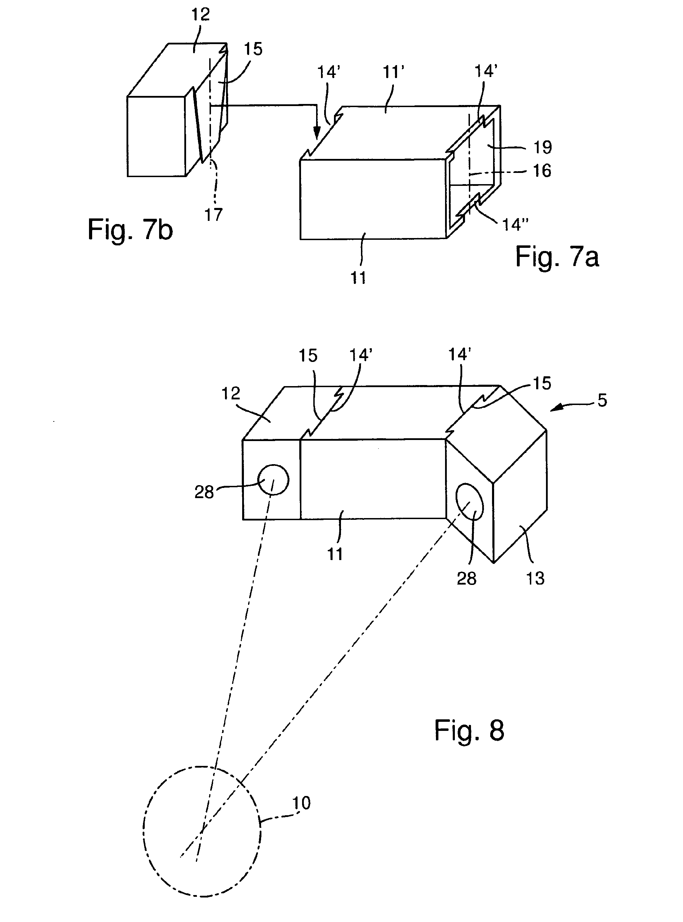

Fig. 8 shows a further embodiment of the optical arrangement 5 according to the present invention. This embodiment is shown in detail in Figs. 7a and 7b. It can be clearly seen that the carrier unit 11 is made of a hollow profile. At the distal end of the profile 11 the grooves 14 have been milled into the material of the profile 11. Due to the hollow cross section of the profile 11, the groove 14 essentially comprises a first part 14' located at the distal end of a first sidewall 11' and a second part 14'' located at the distal end of another sidewall (not visible in Figs. 7a to 8) opposite to the first sidewall 11'. The two partial grooves 14', 14'' together form the groove 14 and function just the same way as described above in respect to the embodiment of Figs. 4a, 4b. The fact that in the embodiment of Figs. 7a, 7b the grooves 14 are not continuous but rather made up of two separate parts 14', 14'' has no negative impact on the functioning of the tapered dovetail connection arrangement 14, 15 suggested in the present invention for releasably connecting the optical acquiring unit 12 and/or the light emitting unit 13 and/or the external attachment assembly 11a to the carrier unit 11 of an optical arrangement 5.

As shown in Fig. 7a, the carrier unit 11 has a hollow space 19 in its inside, which opens to the outside at the distal ends of the profile 11. Means for processing and controlling the optical acquiring unit 12 and/or the light emitting unit 13, for example a central processing unit (CPU) with appropriate software for processing and controlling running thereon, can be located within the space 19. The processing and controlling means are in a data communication connection with the robot's control unit 4 and/or with the higher-ranking external controller. Furthermore, the cabling for connecting the processing and controlling means with the optical acquiring unit 12 and the light emitting unit 13 can also be fully integrated within the hollow space 19. The openings of the hollow space 19 at the distal ends of the carrier unit 11 are then completely closed by positioning the optical acquiring unit 12 and the light emitting unit 13 at the distal ends of the carrier unit 11 by means of the tapered dovetail connection arrangement 14, 15. Hence, in the embodiment of Figs. 7a, 7b and 8, the optical acquiring unit 12 and the light emitting unit 13 also serve as removable covers for the openings of the hollow space 19 of the carrier unit 11. As a result, the optical arrangement 5 according to the present invention shown in Fig. 8 is completely closed and shows no electronic components and cabling as these are fully integrated into the inside of the optical arrangement 5. The optical arrangement 5 according to the present invention besides the functional advantages also has a very appealing appearance.

In the embodiments of Figs. 5 and 6 separate covers 19a (see Figs. 9 and 10) are provided to close the openings of the hollow space 19 after insertion and connection of the processing and controlling means and/or the cabling. The covers 19a are attached to the carrier unit 11 by means of one or more fastening elements, in particular screws.

Fig. 9 shows another embodiment of the optical arrangement 5 according to the present invention, embodied as a laser triangularization sensor. It comprises the main sub-assemblies of the sensor 5. These are the carrier assembly 11, an optical acquiring (e.g. camera) assembly 12, a light emitting (e.g. laser) assembly 13 and an external attachment assembly 11a. The external attachment assembly 11a is connected to an external supporting framework, for example the distal end 2c of a robot's arm 2, by means of a ball joint connection assembly 11d. Alternatively, the external supporting framework could also be a static supporting framework 11b.

Fig. 10 shows the optical arrangement 5 of Fig. 9 in an exploded view. The two portions 14', 14" and 15', 15" of the groove 14 and the protrusion 15 of the tapered dovetail connection 14, 15 are well visible.

Figs. 11 and 12 show yet another embodiment of the optical arrangement 5 according to the present invention. The arrangement 5 is embodied as a combined type of sensor in which more than one of the same type of assemblies 12 or 13 is attached to the same carrier unit 11. In this case two camera assemblies 12 are shown but the same could apply to laser assemblies 13, too. The two camera assemblies 12 form a stereo sensor, whereas the combination of two camera assemblies 12 with one laser assembly 13 in the middle of the carrier unit 11 forms two laser triangularization sensors incorporated in a single optical arrangement 5. Therefore, the optical arrangement 5 shown in Figs. 11 and 12 is a combination of one stereo and two laser trinagularization sensors.

Fig. 13 shows an exploded view of an external attachment assembly 11a. This attachment 11a provides an articulating connection to an external tubular part, which may be, for example, the distal end 2c of a robot's arm 2. The external tubular part 2c ends in a ball 11d of a ball joint. Alternatively, instead of the distal end 2c of the robot's arm 2, the external attachment assembly can also be connected to a static supporting framework 11b via an external sliding-articulating assembly 11c (see Figs. 14, 20, 27 and 28). The external attachment assembly 11a comprises a first plate-like element 11e having one part (e.g. a groove 14) of the tapered dovetail connection arrangement 14, 15 on one side and a spherical depression 11f on the opposite side facing the ball 11d of the ball joint. The radius of the spherical depression 11f matches the radius of the spherical ball 11d. The attachment assembly 11a further comprises another plate-like element 11g located opposite to the first plate-like element 11e in respect to the ball 11d. The further element 11g is fixed to the first element 11e by means of (preferably three) threaded fasteners (screws) 11h thereby clamping the ball 11d between the two elements 11e and 11g. When the three screws 11h are screwed into the first plate-like element 11e, there is a gap between the two opposite faces of the elements 11e and 11g. As a result, as these two elements 11e and 11g are screwed together, they clamp the ball 11d between them.

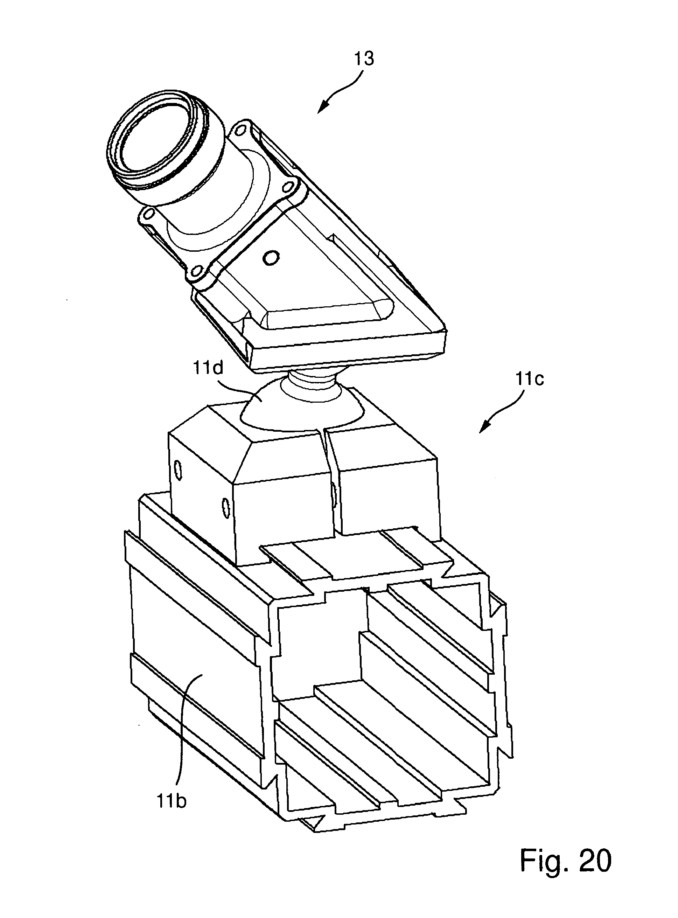

In another embodiment of this invention shown in Figs. 14 and 20, the camera and laser assemblies 12, 13, respectively, are attached to an external supporting framework 11b directly via an external sliding-articulating assembly 11c. In this case a carrier assembly 11 is not required. Since camera and laser assemblies 12, 13 on their own cannot form a metrology system 5, they form part of a larger network. When this network of laser(s) 13 and camera(s) 12 is calibrated with respect to a common reference system or frame it forms a multi-sensor network that can simultaneously measure the desired features of an object 6, 7 such as vehicle body, for example.

Fig. 15 shows an exploded view of the main parts of the embodiment of Fig. 14 without the external supporting framework 11b and the external sliding-articulating assembly 11c. In particular the optical acquiring unit 12 comprises a camera 12a, a camera housing 12b, the spherical cradle 18, a camera housing cover 12c with connectors 12d, a camera lens cover 12e and a light filter 12f. A lens assembly is not shown but is attached at the front of the camera 12a. The camera 12a is fixed to the camera housing 12b by means of four bolts (not shown) that go through the four corresponding holes 12g in the camera housing 12b.

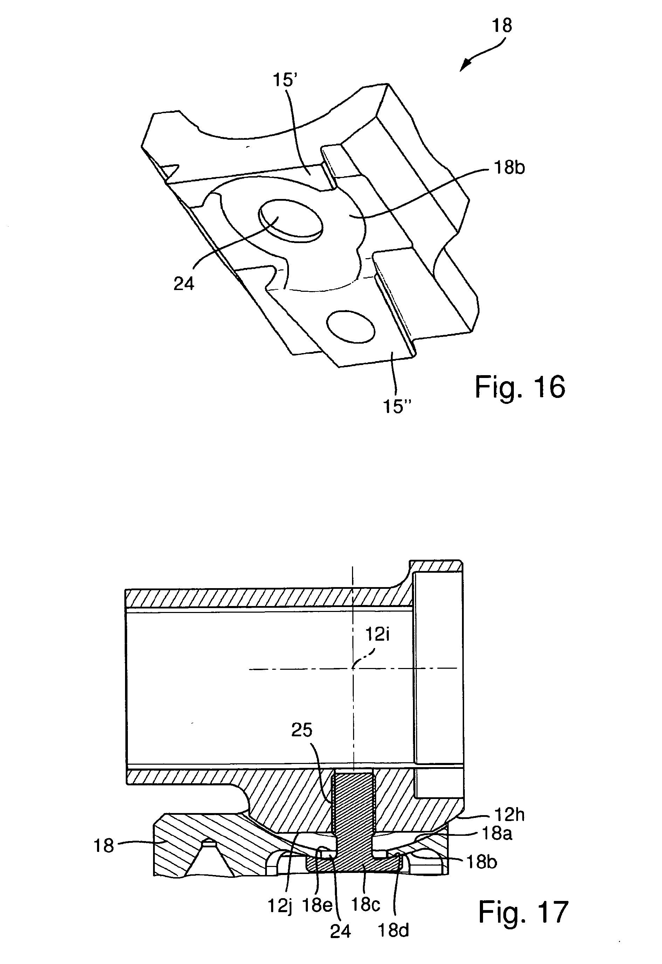

Figure 17 shows a longitudinal cross section AA1 in Fig. 14 through the camera assembly 12. The camera housing 12b has a spherical element 12h at its bottom that is part of a sphere whose centre 12i is located in the centre of the imaging sensor of the camera 12, in particular in the centre of the sensor surface. The spherical surface 12h of the camera housing 12b is mated with a corresponding convex spherical surface 18a on the cradle 18 whose centre is also located in the centre 12i of the imaging sensor. This arrangement allows the camera housing 12b - and hence the camera 12a therein - to be rotated in all three axes relative to the centre 12i of the imaging sensor of the camera 12 and within a range of about ±15°, preferably ±6°.

The cradle 18 has a small spherical dome 18b on its outside. The centre of this external dome 18b is concentric with the centre 12i of the inner spherical surface 18a and both are concentric with the centre of the imaging sensor of the camera 12.

A locking bolt 18c has concave spherical surface 18d on the inside face of the bolt's head. This surface 18d mates with the external convex spherical surface 18b of the cradle 18 so when the locking bolt 18c is slightly loose and the camera housing 12b rocks inside the cradle 18, surface 18d of the locking bolt 18c rolls on the outside of the domed surface 18b. All spherical surfaces are concentric to the centre 12i of the imaging sensor of the camera 12.

The spherical surface 12h at the bottom of the camera housing 12b has a relief 12j whereas the spherical surface 18a of the cradle 18 has a relief 18e. The longitudinal extension of the cradle's 18 relief 18e is oriented approximately 90° to the longitudinal extension of the camera housing's 12b relief 12j. This allows contact between the camera housing 12b and the cradle 18 at four outer spherical pads so that when the locking bolt 18c that is located in the middle of those pads is tightened, the camera housing 12b is locked very securely with respect to the cradle 18.

Figure 16 shows another feature of the cradle, the tapered male dovetail 15. The protrusion feature 15 engages with a corresponding tapered female dovetail feature 14 shown in Figs. 10 and 12 located at the carrier unit 11. Therefore, the fully adjusted, locked and calibrated camera assembly 12 can be removed and replaced as a self-contained unit by another camera assembly 12 by using the highly accurate and repeatable external interface of the tapered dovetail connection arrangement 14, 15.

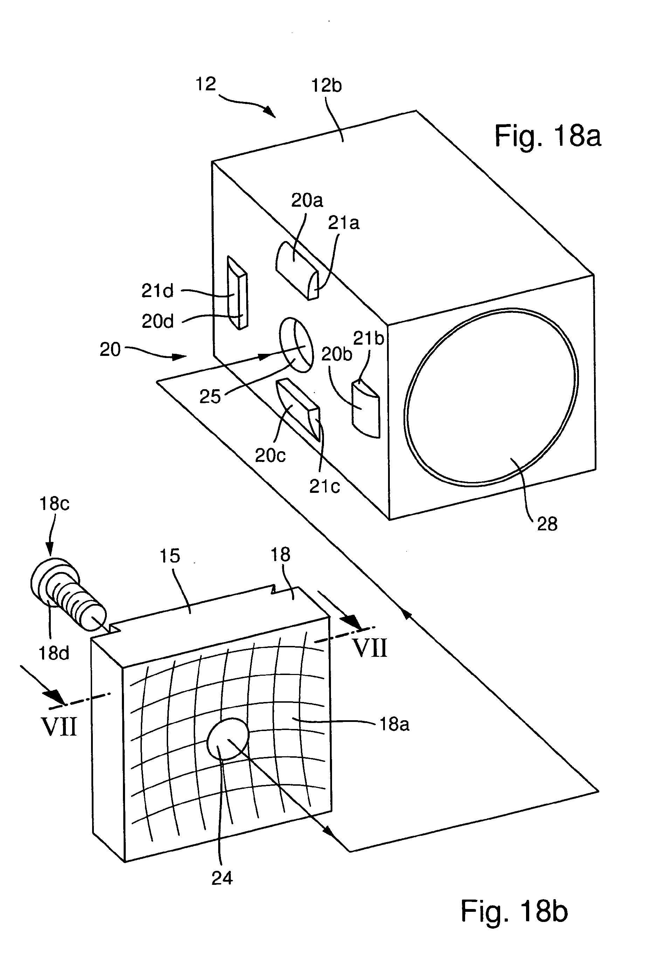

Fig. 18a shows another embodiment of the optical acquiring unit 12. Fig. 18b shows the corresponding coupling element 18, on which one of the two parts of the two-part tapered dovetail connection arrangement 14, 15 is arranged. In the embodiment shown in Fig. 18b the protrusion 15 of the tapered dovetail connection arrangement is located at the coupling element 18. The coupling element 18 can be releasably connected to a bearing surface 20 of the housing 12b of the optical acquiring unit 12. Of course, it would also be possible to provide one of the optical acquiring unit 12 or the light emitting unit 13 with a groove 14 and the other unit 13, 12 with a protrusion 15 and to provide corresponding parts 15, 14 of the tapered dovetail connection arrangement at the carrier unit 11.

Preferably, the bearing surface 20 has a spherical form. According to the embodiment shown in Fig. 18a the form of the bearing surface 20 is defined by partial surfaces 20a to 20d of at least three (in the present embodiment four) pads 21a to 21d all located on the same side 20 of the optical acquiring unit 12. The coupling element 18 comprises the spherical slipping surface 18a facing the bearing surface 20 and having the same radius as the bearing surface. Hence, when the slipping surface 18a rests on the bearing surface 20 and the partial surfaces 20a to 20d, respectively, element 18 can be moved in respect to the optical acquiring unit 12. By moving the coupling element 18 in respect to the optical acquiring unit 12 the position and orientation of the protrusion 15 can be varied in respect to the optical acquiring unit 12 for adjustment and calibration purposes.

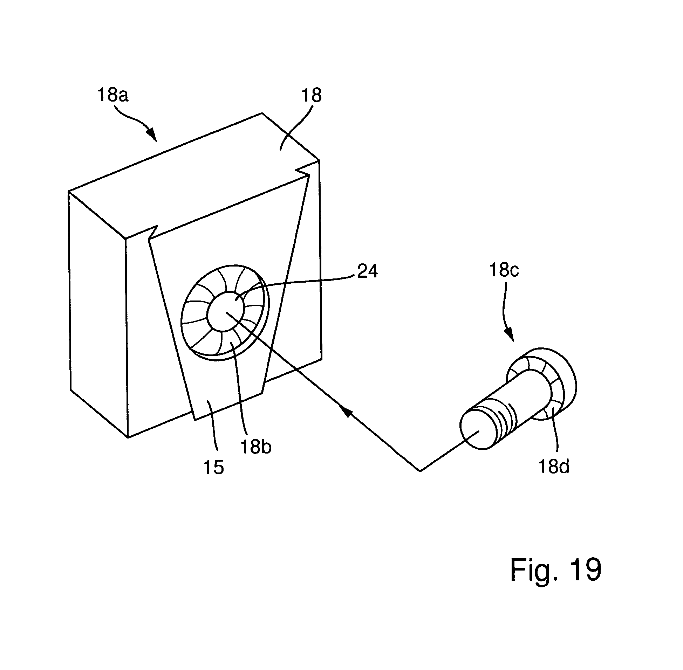

Further, the fastening element 18c is provided for releasably connecting and securing the coupling element 18 to the bearing surface 20 of the optical acquiring unit 12 in a desired position and orientation. In the embodiment shown in Fig. 18b the fastening element 18c is a screw comprising a screw head and a at least partially threaded screw body. When releasably connecting the coupling element 18 to the bearing surface 20, the screw body is inserted into an opening 24 being a conventional through hole and provided in the coupling element 18. The diameter of the opening 24 is preferably larger than the diameter of the screw body. Then the screw body is screwed into a threaded hole 25 provided in the bearing surface 20. An internal collar surface 18d of the screw head facing the screw body rests on the outer dome shaped surface portion 18b (see Fig. 19) of the coupling element 18. By tightening the screw 18c the coupling element 18 is pressed against the bearing surface 20 with its sliding surface 18a by means of the collar surface 18d thereby securing and fastening the coupling element 18 in respect to the optical acquiring unit 12.

For adjusting the relative position and orientation of the coupling element 18 in respect to the optical acquiring unit 12 the screw 18c is slightly loosened. Then, the coupling element 18 can be more or less freely moved in respect to the bearing surface 20 and the optical acquiring unit 12. Thereby, the collar surface 18d slides on the outer surface portion 18b of the coupling element 18.

Fig. 19 shows the back of the coupling element 18 of Fig. 18b. The outer surface portion, on which the collar surface 18 of the screw 18c slides, is designated with the reference sign 18b. The surface portion 18b surrounds the opening 24 disposed in the coupling element 18. The surface portion 18b has a spherical form corresponding to the form of the sliding surface 18a and the bearing surface 20, in particular having the same centre than those two surfaces 20, 18a. Preferably, also the collar surface 18d has a spherical form corresponding to the spherical form of the surface portion 18b, the sliding surface 18a and the bearing surface 20, hence having the same centre. The spherical form of the surface portion 18b and of the collar surface 18d allows a free movement (with the screw 23 loosened) of the coupling element 18 in respect to the bearing surface 20 and in particular a precise, safe and secure fastening of the coupling element 18 in respect to the optical acquiring unit 12 when the screw 18c is tightened. When tightening the screw 18c the collar surface 18d rests with its entire surface on the spherical surface portion 18b. Therefore, tightening of the screw 18c is possible without provoking a movement of the coupling element 18 in respect to the bearing surface 20 during the process of tightening.

Coming back to Fig. 18a, the optical acquiring unit 12 comprises the holding element or housing 12b of essentially cuboid form with an opening 28 disposed therein for receiving the camera 12a of the optical acquiring unit 12. The camera 12a of the optical acquiring unit 12 can comprise, for instance, an analogue or a digital optical sensor array, in particular a CCD- or a CMOS-sensor array. The camera 12a of the optical acquiring unit 12 is, for example, a CCD- or a CMOS-camera and acquires optical data from at least part of the work piece 6 within the acquiring area 10.

Fig. 20 shows a light emitting unit 13 in an embodiment where it is attached directly to an external supporting framework 11b via an external sliding-articulating assembly 11c. In this case a carrier assembly 11 is not required. The external attachment assembly 11c provides a sliding-articulating connection of the light emitting unit 13 to the external supporting framework 11b, which may be, for example, a Montrac®-rail sold by Montech AG, Switzerland, or something similar. Figure 28 shows the main parts of the attachment assembly 11c. The dovetail-ball-element 11d, 14 comprises the spherical ball 11d and is connected to an essentially plate-like element comprising a groove 14 of the tapered dovetail connection arrangement 14, 15 that attaches to the light emitting unit 13. The ball 11d fits inside two matching semi-spherical cavities of the split attachment assembly 11c', 11c''. When all parts are assembled together using threaded fasteners 11i, the straight dovetail portions 11j on the two parts 11c', 11c'' of the attachment assembly 11c engage with the straight dovetail portions 11k of the rail 11b and as the bolts 11i are tightened, the two parts 11c', 11c'' clamp tightly the rail 11b and the ball 11d at the same time.

It is noted that the light emitter of the light emitting unit 13 preferably comprises a laser light emitter, for example one or more LEDs. The light emitting unit 13 illuminates at least part of the acquiring area 10, in particular the work piece 6 and adjacent components 7, if present within the acquiring area 10. The light emitting unit 13 can generate a light pattern, for instance in the form of a light line or a light grid, on the work piece 6 and - if present - on the adjacent component 7 in order to enable secure, fast and reliable determination of gap and displacement dimensions 8, 9 of the work piece 6 in respect ot adjacent components 7 within the acquiring area 10.

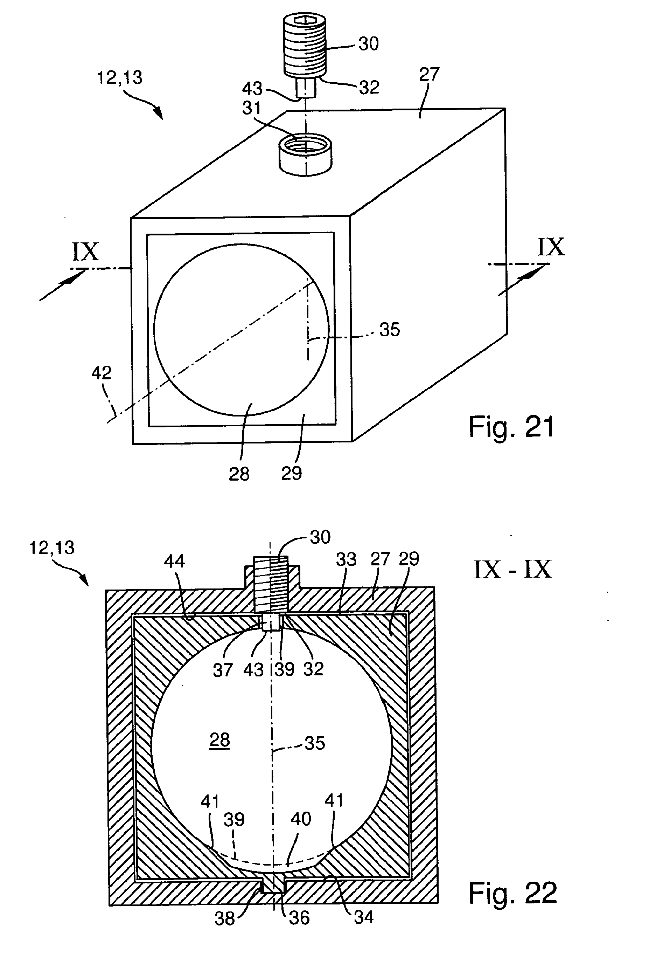

Figs. 21 and 22 show a further embodiment of a light emitting unit 13 making part of the optical arrangement 5 according to the present invention. According to this embodiment the actual light emitter of the light emitting unit 13 is attached to an insertion element 29, which is movably inserted in the holding element 27 connected to the carrier unit 11 in the above-identified way with the two-part tapered dovetail connection arrangement 14, 15 (not shown in Figs. 21, 22). A fixing element 30 is provided for fixing the insertion element 29 in a desired position and orientation in respect to the holding element 27. In the embodiment shown in Figs. 21 and 22 the fixing element 30 is designed as a headless screw to be screwed into a threaded hole 31 provided in the holding element 27 of the optical acquiring unit 12 or the light emitting unit 13. The threaded hole 31 can be provided completely within the material of the holding element 27, wherein the opening of the threaded hole 31 extends essentially within the plane defined by the outer upper surface of the holding element 27. Alternatively, as shown in Fig. 21 and 22, the threaded hole 31 is provided within a collar element protruding from the upper outer surface of the holding element 27.

The fixing element 30 has an abutment surface 32, which presses against an outer surface 33 of the insertion element 29 when the screw 30 is tightened. Thereby, the insertion element 29 is pressed against a bottom surface 34 of the holding element 27, thereby securing the insertion element 29 in respect to the holding element 27 in its current position and orientation. When loosening the screw 30 again, the insertion element 29 can be freely moved within the holding element 27 around a vertical axis 35. The axis 35 of rotation is defined by a bottom pin 36, preferably integrally formed on a bottom surface of the insertion element 29, and by an upper pin 37, preferably making part of the screw 30. The bottom pin 36 extends into a guiding hole 38 located in the inner bottom surface 34 of the holding element 27. The upper pin 37 extends into an opening 39 disposed in the top surface 33 of the insertion element 29. In Fig. 22 the openings 38, 39 seem to have a much larger diameter than the guiding pins 36, 37. This has been drawn in this way for clarity purposes only. In reality it is obvious that the diameter of the guiding holes 38, 39 is only slightly larger than the diameter of the guiding pins 36, 37, in order to ensure a movement of the insertion element 29 around the axis of rotation 35 in respect to the holding element 27 essentially free of play.

The opening 28 for receiving the actual light emitter of the light emitting unit 13 is located within the insertion element 29. The opening 28 has an essentially circular inner cross sectional form and extends along a longitudinal axis 42. The circular form of the opening 28 is designated with reference sign 39 in Fig. 22. It can be clearly seen that opposite to the screw 30 and the guiding pin 37 the inner circumferential form of the opening 28 deviates from the circular form 39. In particular, at the bottom of the opening 28 a recess 40 is defined. Given that the actual light emitter of the light emitting unit 13 has a circular cross sectional form, too, sections 41 between the circular form 39 of the opening 28 and the recess 40 act as resting shoulders for the actual light emitter.

The actual light emitter can be moved within the opening 28 of the insertion element 29 parallel to the longitudinal axis 42 (see Fig. 21). When the fixing element 30 is screwed into the threaded hole 31 the distal bottom end surface 43 of the guiding pin 37 fixes the actual light emitter in a desired position in respect to the insertion element 29 by pressing the light emitter against the resting shoulders 41. Preferably, the fixing element 30 fixes the insertion element 29 in the desired position in respect to the holding element 27 (by means of the abutment surface 32 as described above) and at the same time also fixes the actual light emitter within the opening 28 in the desired position in respect to the insertion element 29 (by means of the end surface 43). This is achieved by the collar 32 of the fixing element 30 acting upon the outer upper surface 33 of the insertion element 29 and the bottom distal end surface 43 of the fixing element 30 and the guiding pin 37, respectively, acting upon the outer surface of the actual sensor or the light emitter.

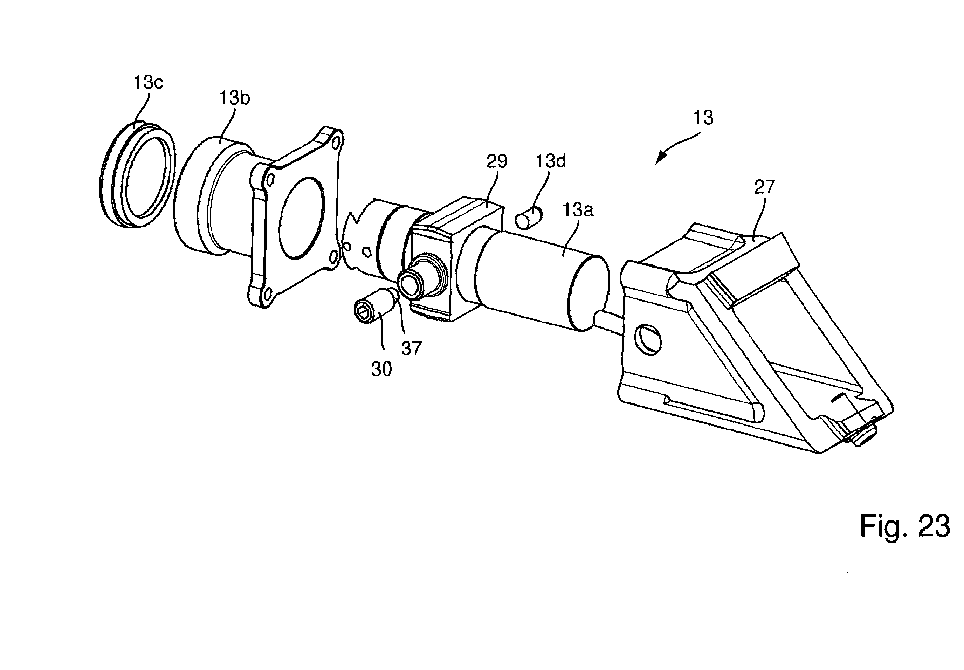

Fig. 23 shows an exploded view of the main parts of the light emitting unit 13 of Fig. 20 except for the external sliding-articulating assembly 11c and the static supporting framework 11b. The light emitting unit 13 is preferably embodied as a laser assembly comprising a laser 13a, a laser housing 27, a laser clamping and pivot block 29, a lens cover item 13b and a lens filter 13c.

The laser clamping and pivoting block 29 is supported by a pin 13d at one end of the block 29 and the plain (unthreaded) portion 37 of the locking screw 30 at the opposite face of the block 29. Since the axes 35 of the pin 13d and the unthreaded portion 37 of the screw 30 are in line, the laser clamping block 29 - and hence the laser 13a held by the block - can pivot by approximately ±15°, preferably by ±6°, about their common axis 35.

The locking screw 30 performs a pivotal function for the laser clamping block 29 and a locking function at the same time so when the laser/projector 13a is adjusted to the desired location, the locking screw 30 is screwed a bit further into block 29 thereby causing the block 29 and the laser 13a to be clamped against the inner surface 34 of the laser housing 27. This is a convenient way to adjust the rotation and pointing of the laser/light projector 13a and securely clamp it in place by operating a single item, the locking screw 30 in this case.

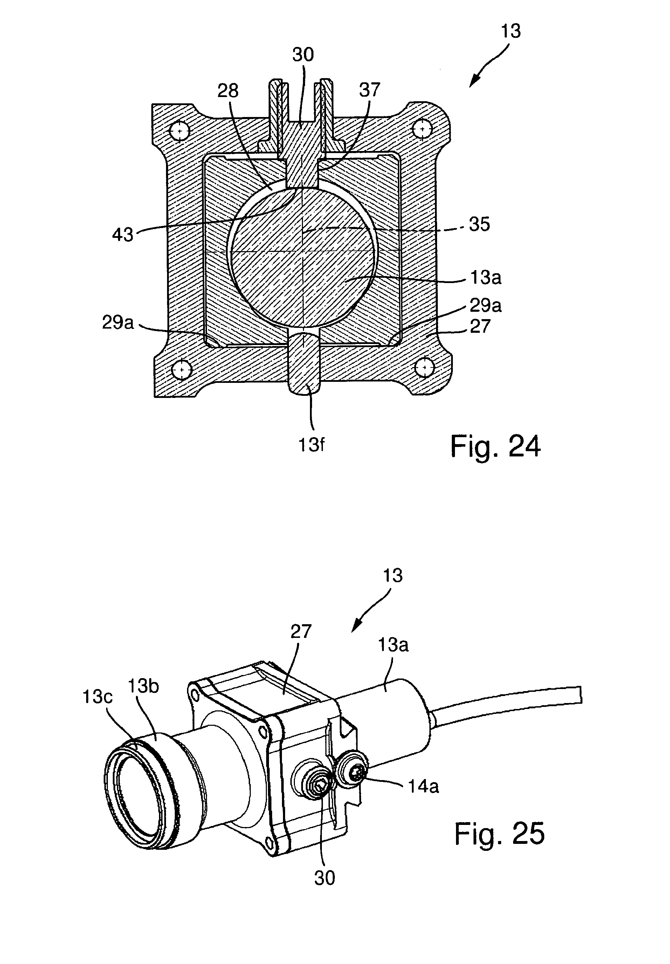

By reference to Fig. 24, when the locking screw 30 is rotated, with its distal end surface 43 it presses down the laser/projector 13a. The laser/projector 13a in turn presses down the laser clamping and pivoting block 29 and presses the two raised outer pads 29a against the inside face of the laser housing 27. This clamps the entire laser block 29 and the laser 13a against the laser housing 27 thereby securing all elements in their current position. Of course, the direction of the pressure which the screw 30 exercises on the other elements depends on the orientation of the light emitting assembly 13. For example, the screw 30 could just as well jack upwards the laser 13a and the laser block 29 or push these elements to one side.

Figure 25 shows another variant of the light emitting unit 13 in the form of a laser assembly, in which the laser housing 27 is rectangular rather that triangular as shown in Figure 23. Irrespective of the shape of the laser housing 27, the mechanism of laser adjustment and clamping is the same.

Alternatively to the embodiment shown in Figs. 21 and 22 and described above, the insertion element 29 could also have an at least partially spherically formed outer surface 33. In that case the holding element 27 would have an at least partially spherically formed inner receiving surface 44 for accommodating the outer surface 33 of the insertion element 29. Thereby, the insertion element 29 and the holding element 27 would form a ball-joint-type connection allowing movement of the insertion element 29 in respect to the holding element 27 not only around the vertical axis 35 but also around a further axis (not shown in Figs. 21 and 22) extending essentially perpendicular to the axis 35. In this alternative embodiment the insertion element 29 could be fixed by the fixing element 30 in a desired position and orientation in respect to the holding element 27 just the same way as described above with reference to the embodiment of Figs. 21 and 22. Furthermore, the actual light emitter could be fixed in the opening 28 in any desired position in respect to the insertion element 29 by means of the fixing element 30 just the same way as described above with reference to the embodiment of Figs. 21 and 22.

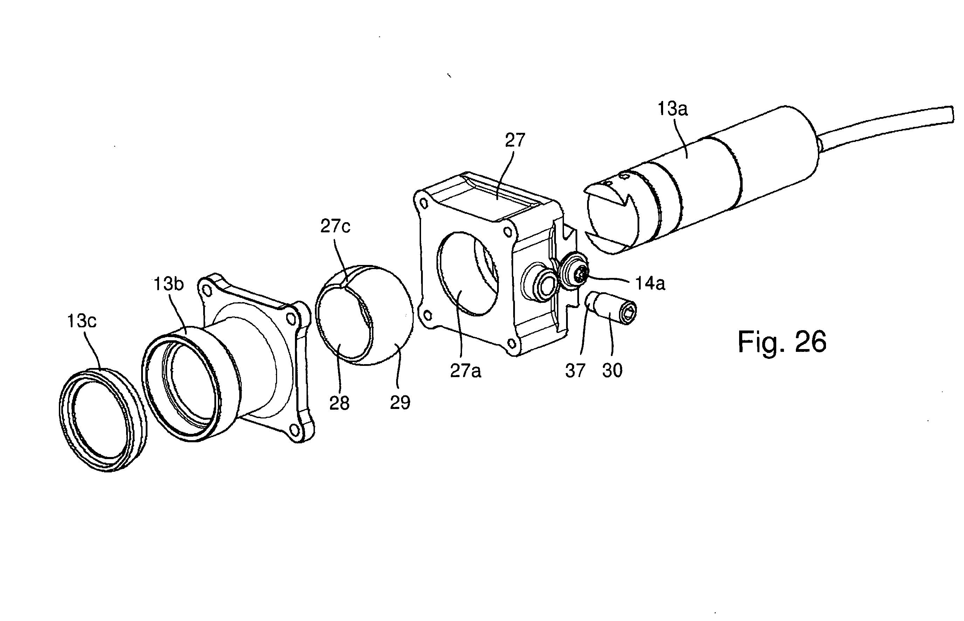

Such an embodiment is shown in Fig. 26. The laser housing 27 has an internal spherical cavity 27a in which an insertion element 29 having a spherical outer surface fits so that the element 29 is free to rotate with a limited angle of about ±15°, in particular ±6° about all three axes. The spherical insertion element 29 is preferably a single part having a slit 27c. The laser/projector 13a passes through the hole 28 in the spherical element 29. When the jacking screw 30 is screwed into the laser housing 27, it presses against the outer surface of the element 29. Since the element 29 is split it contracts due to the pressure applied thereon by the distal end of the screw 30 and grips the laser 13a inserted in the hole 28. Since the spherical element 29 is pressed against the spherical surface 27a of the housing 27, the element 29 and the laser 13a are clamped against the laser housing 27. Laser adjustment in all axes as well as clamping are both achieved by operating a single item, the locking screw 30.

Fig. 27 shows an external attachment assembly 11c that provides a sliding-articulating connection of sensor 5 (or any other sensor for that matter) to an external supporting framework 11b. The various parts of the attachment assembly 11c and their functioning have been explained in detail before with reference to Fig. 28.
Summing up, some major aspects of the present invention are the following:
1) There are provided various elements (camera assembly 12, laser assembly 13 and complete laser sensors 5 of various types) that are part of an optical measurement system 5. Those elements are interfaced to a common carrier 11 or external supporting framework 11b via a tapered dovetail connection arrangement 14, 15,
2) Provision for adjustability and positive locking of the elements (cameras 12 and lasers/projectors 13) above their tapered dovetail interface 14, 15, in at least one axis of rotation,
3) Adjustability and positive locking of camera housing 12b and hence the camera 12a therein with respect to its tapered dovetailed base 14; 15, said adjustability being a rotational capability about all three axes and about the centre of the imaging sensor of the camera 12.

## Claims

1. Optical arrangement (5) comprising a carrier unit (11) made of a rigid material, at least one of an optical acquiring unit (12) and a light emitting unit (13), all of the optical acquiring and light emitting units (12, 13) of the optical arrangement (5) being releasably connected to the carrier unit (11), **characterized by** the fact that at least one of the optical acquiring unit (12) and the light emitting unit (13) is connected to the carrier unit (11) by means of a two-part tapered dovetail connection arrangement (14, 15).

2. Optical arrangement (5) according to claim 1, **characterized by** the fact that the two-part tapered dovetail connection arrangement (14, 15) comprises means (14a) for holding or securing the optical acquiring unit (12) and the light emitting unit (13), respectively, in respect to the carrier unit (11), when the optical acquiring unit (12) and the light emitting unit (13), respectively, is properly connected to the carrier unit (11).

3. Optical arrangement (5) according to claim 1 or 2, **characterized by** the fact that at least one of the two parts (14, 15) of the two-part tapered dovetail connection arrangement is arranged on a coupling element (18), which is releasably connected to a bearing surface (20) of the optical acquiring unit (12), the light emitting unit (13) or the carrier unit (11), respectively.

4. Optical arrangement (5) according to claim 3, **characterized by** the fact that the bearing surface (20) has a spherical form.

5. Optical arrangement (5) according to claim 3 or 4, **characterized by** the fact that the form of the bearing surface (20) is defined by partial surfaces (20a, ... 20d) of at least three pads (21a, ... 21d) all located on the same side of the optical acquiring unit (12), the light emitting unit (13) or the carrier unit (11), respectively.

6. Optical arrangement (5) according to claim 4 or 5, **characterized by** the fact that the coupling element (18) comprises a spherical slipping surface (18a) facing the spherical bearing surface (20) and having the same centre (12i) as the bearing surface (20).

7. Optical arrangement (5) according to one of the claims 3 to 6, **characterized by** the fact that a fastening element (18c) is provided for releasably connecting and securing the coupling element (18) to the bearing surface (20) in a desired position and orientation.

8. Optical arrangement (5) according to claim 7, **characterized by** the fact that the fastening element (18c) comprises a screw, wherein a screw head rests on an outer surface (18b) of the coupling element (18) located opposite to the slipping surface (18a) and a screw body is inserted into an opening (24) provided in the coupling element (18) and screwed into a threaded hole (25) provided in the bearing surface (20).

9. Optical arrangement (5) according to claim 8, **characterized by** the fact that a collar surface (18d) of the screw head resting on the outer surface (18b) of the coupling element (18) has a spherical form corresponding to a spherical form of the outer surface (18b), in particular having the same centre (12i).

10. Optical arrangement (5) according to one of the claims 1 to 9, **characterized by** the fact that the optical acquiring unit (12) acquires optical data from at least a part of a work piece (6) within an acquiring area (10) and that the light emitting unit (13) illuminates at least part of the acquiring area (10).

11. Optical arrangement (5) according to one of the claims 1 to 10, **characterized by** the fact that the optical arrangement (5) comprises means for processing and controlling, which are connected to the optical acquiring unit (12) and the light emitting unit (13), respectively, and that the carrier unit (11) comprises a hollow space (19) wherein the processing and controlling means are located.

12. Optical arrangement (5) according to one of the claims 1 to 11, **characterized by** the fact that the optical arrangement (5) is adapted for connection to a distal end (2c) of an arm (2) of a manipulator (1), in particular to a distal end (2c) of a robot arm (2) of an industrial robot (1).

13. Optical arrangement (5) according to one of the claims 1 to 12, **characterized by** the fact that the optical acquiring unit (12) and the light emitting unit (13), respectively, comprise an insertion element (29), which is movably inserted in a holding element (27) connected to the carrier unit (11), whereas a fixing element (30) is provided for fixing the insertion element (29) in a desired position and orientation in respect to the holding element (27).

14. Optical arrangement (5) according to claim 13, **characterized by** the fact that the optical acquiring unit (12) comprises a camera (12a) and/or the light emitting unit (13) comprises a laser (13a), and that the camera (12a) and the laser (13a), respectively, is movably attached to the insertion element (29), whereas the fixing element (30) when fixing the insertion element (29) in the desired position and orientation in respect to the holding element (27) also fixes the camera (12a) of the optical acquiring unit (12) and the laser (13a) of the light emitting unit (13), respectively, in a desired position and orientation in respect to the insertion element (29).

15. Optical arrangement (5) according to claim 13 or 14, **characterized by** the fact that insertion element (29) is movable in respect to the holding element (27) around an axis (35) or that the insertion element (29) has an at least partially spherically formed outer surface and the holding element (27) has an at least partially spherically formed receiving surface (27a) for accommodating the insertion element (29), the insertion element (29) and the holding element (27) thereby forming a ball joint type connection.
